# EUROPÄISCHE PATENTSCHRIFT

(11) **EP 1 712 072 B1**
(45) Veröffentlichungstag und Bekanntmachung des Hinweises auf die Patenterteilung: **14.09.2011**
(21) Anmeldenummer: 05707084.9
(22) Anmeldetag: 29.01.2005
(51) Int. Cl.: H04M 1/725

(54) **NACHRICHTENERZEUGUNG**
MESSAGE CREATION
CREATION DE MESSAGES

(30) Priorität: 05.02.2004 DE 102004005900
(43) Veröffentlichungstag der Anmeldung: 18.10.2006
(73) Patentinhaber: Vodafone Holding GmbH, 40213 Düsseldorf (DE)
(72) Erfinder: DEGEN, Helmut, 40470 Düsseldorf (DE); LÜDEMANN, Markus, 40479 Düsseldorf (DE); RUNGE, Matthias, 40211 Düsseldorf (DE)
(74) Vertreter: Weisbrodt, Bernd
(86) Internationale Anmeldenummer: PCT/EP2005/000900
(87) Internationale Veröffentlichungsnummer: WO 2005/076585

(56) Entgegenhaltungen:
- EP-A- 1 111 883
- WO-A-02/49319
- GB-A- 2 386 299

## Beschreibung

Die vorliegende Erfindung betrifft ein Verfahren zur Erzeugung einer mindestens einen Informationstyp beinhaltenden Nachricht seitens eines in einem Mobilfunknetz betreibbaren mobilen Endgerätes, wobei die Nachrichtenerzeugung in wenigstens zwei zeitlich aufeinanderfolgenden Verfahrensschritten erfolgt und in jedem Verfahrensschritt ein einzelner Informationstyp in die Nachricht eingefügt wird. Ferner betrifft die vorliegende Erfindung ein mobiles Endgerät zur Nutzung in Mobilfunknetzen, welches zur Ausführung des Verfahrens ausgebildet ist.

Im Stand der Technik (GB 2 386 299) ist es bekannt, seitens eines in einem Mobilfunknetz betreibbaren mobilen Endgerätes über das Mobilfunknetz mittels eines Mitteilungsdienstes des Mobilfunknetzes übertragbare Nachrichten zu erzeugen, welche wenigstens einen der Informationstypen - auch Informationsmedium bzw. Medium genannt - Graphik, Text, Bild, Audio und/oder Video, beinhalten, in der Regel als Objekte. Derartige Nachrichten werden beilspielsweise als sogenannte Multimedia-Mitteilungen mittels eines Multimedia-Mitteilungsdienstes über ein Mobilfunknetz übertragen. Bei der Nachrichtenerzeugung werden schrittweise, das heißt in zeitlich aufeinanderfolgenden Verfahrensschritten, einzelne Informationstypen in die Nachricht eingefügt. Bisher müssen dabei die bei der Nachrichtenerzeugung anfallenden Verfahrensschritte seitens des mobilen Endgerätes als separate Nachricht bzw. separater Nachrichtenbestandteil erfasst und bedarfsweise gespeichert bzw. zwischengespeichert werden.

Die bisher bekannte Nachrichtenerzeugung ist insofern für den Nachrichtenerzeuger mit einem nicht unerheblichen Aufwand verbunden, insbesondere da mitunter zahl- und umfangreiche und damit fehlerträchtige Eingaben des Nachrichtenerzeugers seitens des mobilen Endgerätes erforderlich sind. Ferner sind nachträgliche Veränderungen der bei der Nachrichtenerzeugung in den einzelnen Verfahrensschritten erzeugten Nachrichtenbestandteile nicht bzw. nur mit erheblichem Aufwand möglich, insbesondere da die in den einzelnen Verfahrensschritten erzeugten Nachrichtenbestandteile nur separat voneinander wiedergebbar sind. Für die meisten Nutzer von mobilen Endgeräten ist die bisher bekannte Nachrichtenerzeugung zu umständlich und schwierig durchzuführen, so dass diese Nutzer in der Regel von einer Nachrichtenerzeugung seitens des mobilen Endgerätes und damit von einer Nutzung von mit dem mobilen Endgerät nutzbarer Mitteilungsdienste eines Mobilfunknetzes absehen. Darüber hinaus werden von den meisten Nutzern die bei der Nachrichtenerzeugung zur Verfügung stehenden Nachrichtengestaltungsmöglichkeiten, welche insbesondere bei Kombinationen von unterschiedlichen Informationstypen in einer Nachricht gegeben sind, aufgrund der bisher gegebenen aufwendigen und bedienerunfreundlichen Nachrichtenerzeugung nur unzureichend verwendet.

In Anbetracht dieses Standes der Technik liegt der vorliegenden Erfindung die Aufgabe zugrunde, eine Nachrichtenerzeugung der Eingangs genannten Art unter Meidung der beschriebenen Nachteile derart zu verbessern, dass eine einfachere und bedienerfreundlichere Nachrichtenerzeugung ermöglicht wird.

Zur technischen **Lösung** dieser Aufgabe wird erfindungsgemäß vorgeschlagen, dass die bei der Nachrichtenerzeugung anfallenden Verfahrensschritte seitens des mobilen Endgerätes zusammenhängend erfasst werden und seitens des mobilen Endgerätes wiedergebbar sind.

Der Erfindung liegt die Erkenntnis zugrunde, dass durch ein zusammenhängendes Erfassen der bei der Nachrichtenerzeugung anfallenden Verfahrensschritte seitens des mobilen Endgerätes die Nachrichtenerzeugung seitens des mobilen Endgerätes für den Nachrichtenerzeuger einfacher und bedienerfreundlicher erfolgen kann, insbesondere da ein bisher bei der Nachrichtenerzeugung gegebenes Speichern bzw. Zwischenspeichern der in den einzelnen Verfahrensschritten erzeugten Nachrichten bzw. Nachrichtenbestandteile entfallen kann.

Vorteilhafterweise sind die bei der Nachrichtenerzeugung anfallenden Verfahrensschritte seitens des mobilen Endgerätes wiedergebbar, vorzugsweise fortlaufend endsprechend der zeitlichen Reihenfolge der Verfahrensschritte bei der Nachrichtenerzeugung. Die in den einzelnen Verfahrensschritten erzeugten Nachrichtenbestandteile der Nachricht sind so entsprechend Ihrer Erzeugung nach Art einer Folie oder Laufband seitens des mobilen Endgerätes wiedergebbar. In einer weiteren vorteilhaften Ausgestaltung der Erfindung sind die Verfahrensschritte bei der Nachrichtenerzeugung wiedergebbar. So ist zum Beispiel während der Erzeugung eines Nachrichtenbestandteils in einem nachfolgenden Verfahrensschritt für den Nachrichtenerzeuger überprüfbar, welche Nachrichtenbestandteile in vorhergehenden Verfahrensschritten erzeugt wurden. In einer konkreten Ausgestaltung der Erfindung sind die Verfahrensschritte seitens einer optischen Anzeigeeinrichtung des mobilen Endgerätes wiedergebbar, vorzugsweise derart, dass wenigstens ein Verfahrensschritt seitens der optischen Anzeigeeinrichtung wiedergebbar ist. In einer besonders bevorzugten Ausgestaltung der Erfindung sind die Verfahrensschritte horizontal oder vertikal nebeneinander angeordnet seitens der optischen Anzeigeeinrichtung wiedergebbar, so dass der Nachrichtenerzeuger bei der Nachrichtenerzeugung durch entsprechende Eingaben seitens des mobilen Endgerätes, vorzugsweise durch Betätigung einer Eingabeeinrichtung, vorzugsweise Tasten einer Tastatur, die bei der Nachrichtenerzeugung angefallenen Verfahrensschritte bzw. die in den Verfahrensschritten jeweils erzeugten Nachrichtenbestandteile in einem sogenannten Scrolling seitens der optischen Anzeigeeinrichtung des mobilen Endgerätes wiedergeben kann.

In einer besonders vorteilhaften Ausgestaltung der Erfindung sind die einzelnen Verfahrensschritte der Nachrichtenerzeugung separat veränderbar. Vorteilhafterweise bewirken Veränderungen in einem vorergehenden Verfahrensschritt entsprechende Veränderungen in einem nachfolgenden Verfahrensschritt.

In einer weiteren vorteilhaften Ausgestaltung der Erfindung sind bei der Nachrichtenerzeugung einzelne und/oder mehrere Verfahrensschritte einfügbar oder entfernbar. Durch diese erfindungsgemäßen Ausgestaltungen lassen sich je nach Bedarf beliebige Kombinationen aus den verfügbaren Informationstypen zu einer Nachricht zusammenstellen. Ferner ist eine Bearbeitung einzelner Verfahrensschritte bzw. entsprechender in den Verfahrensschritten erzeugter Nachrichtenbestandteile gegeben. Insgesamt wird die Nachrichtenerzeugung hinsichtlich der Bedienbarkeit für den Nachrichtenerzeuger weiter vereinfacht und das Maß der zur Verfügung stehenden Gestaltungsmöglichkeiten bei der Nachrichtenerzeugung für den Nachrichtenerzeuger weiter vereinfacht und besser ausnutzbar.

In einer weiteren vorteilhaften Ausgestaltung der Erfindung sind als elementare Informationstypen Graphik, Text, Bild, Audio, Video und/oder rechnergenerierte Animation vorgesehen, wobei die einzelnen Informationstypen auch Objekte aus bzw. von standardisierten Anwendungen, beispielsweise standardisierte Graphik-, Audio- und/oder Videoformate, sein können. Vorteilhafterweise sind die Informationstypen beliebig miteinander kombinierbar und vorteilhafterweise separat bearbeitbar.

In einer weiteren vorteilhaften Ausgestaltung der Erfindung sind die Verfahrensschritte der Nachrichtenerzeugung zusammenhängend und/oder jeweils separat als Objekt, beispielsweise in einer Datei, seitens des mobilen Endgerätes speicherbar. Eine weitere vorteilhafte Ausgestaltung der Erfindung sieht vor, dass die erzeugte Nachricht als Objekt, beispielsweise in einer Datei, seitens des mobilen Endgerätes speicherbar ist. Zur Speicherung der Objekte ist vorteilhafterweise seitens des mobilen Endgerätes wenigstens ein dafür vorgesehener Speicher zur dauerhaften Speicherung des bzw. der Objekte vorgesehen. Darüber hinaus ist vorteilhafterweise ein automatisches Zwischenspeichern in einem dafür vorgesehenen Speicher seitens des mobilen Endgerätes vorgesehen.

Vorteilhafterweise ist die Nachricht mit einem Nachrichtendienst des Mobilfunknetzes über das Mobilfunknetz übertragbar, vorzugsweise mittels eines Multimedia-Mitteilungsdienstes (MMS).

Vorteilhafterweise ist die Nachricht auf ein oder mehrere mobile Endgeräte in dem Mobilfunknetz übertragbar.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: in einer schematischen Prinzipdarstellung ein Ausführungsbeispiel einer im Stand der Technik bekannten Nachrichtenerzeugung und
- Fig. 2: in einer schematischen Prinzipdarstellung ein Ausführungsbeispiel einer erfindungsgemäßen Nachrichtenübertragung.

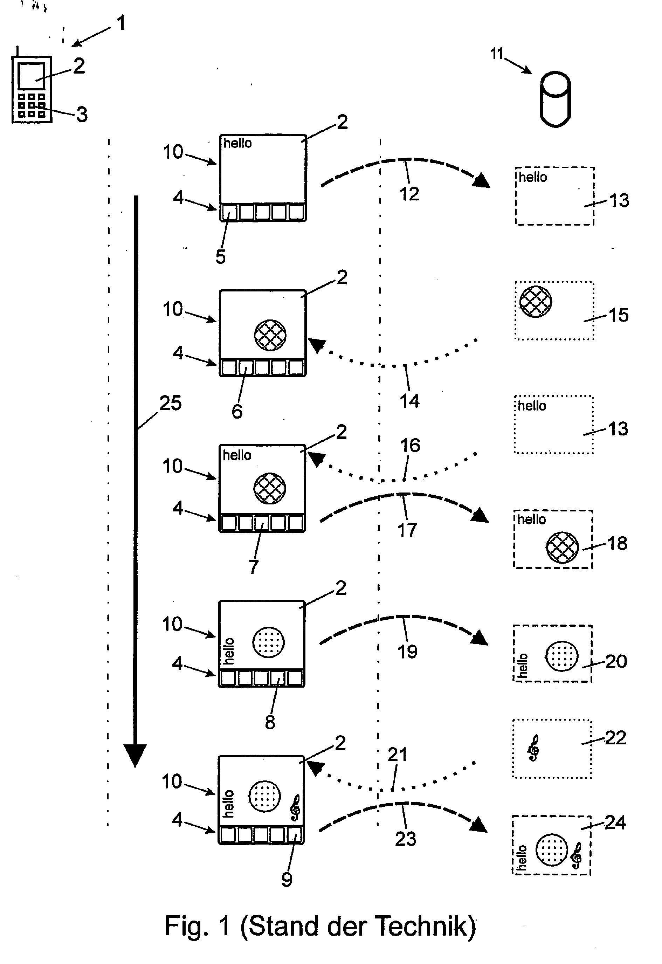

Fig. 1 zeigt die im Stand der Technik bekannte Nachrichtenerzeugung seitens eines in einem Mobilfunknetz betreibbaren mobilen Endgerätes 1, vorliegend einem Mobilfunktelefon, welches ein als Ausgabeeinrichtung dienendes Display 2 und eine als Eingabeeinrichtung dienende Tastatur 3 aufweist. Seitens der Ausgabeeinrichtung 2 des mobilen Endgerätes 1 wird im Rahmen der Nachrichtenerzeugung vorliegend in einem unteren. Bereich ein Auswahlmenü 4 mit Funktionen 5, 6, 7, 8 und 9 angezeigt, welche bei entsprechender Auswahl durch Tastenbetätigung seitens der Eingabeeinrichtung 3 des mobilen Endgerätes 1 ein Bearbeiten, das heißt Erzeugen und/oder Verändern, verschiedener Informationstypen einer zu erzeugenden Nachricht ermöglichen. Das jeweilige Ergebnis der in den einzelnen in Richtung des mit 25 gekennzeichneten Pfeiles zeitlich aufeinanderfolgenden Verfahrensschritte der Nachrichtenerzeugung ist in dem mit 10 gekennzeichneten Bereich der Ausgabeeinrichtung 2 des mobilen Endgerätes 1 dargestellt.

Vorliegend wird bei entsprechender Tasteneingabe seitens der als Eingabeeinrichtung dienenden Tastatur 3 des mobilen Endgerätes 1 mit der Funktion 5 ein Nachrichtenbestandteil vom Informationstyp Text, vorliegend "hello", durch entsprechende Tasteneingabe seitens der als Eingabeeinrichtung dienenden Tastatur 3 des mobilen Endgerätes 1 erzeugt. Der erzeugte Nachrichtenbestandteil vom Informationstyp Text wird durch entsprechende Tasteneingabe seitens der als Eingabeeinrichtung dienenden Tastatur 3 des mobilen Endgerätes 1 in einem Speicher 11 des mobilen Endgerätes 1 als Datei oder Objekt 13 gespeichert. Die Speicherung der Datei bzw. des Objektes 13 ist in Fig. 1 symbolisch durch den mit 12 gekennzeichneten Pfeil dargestellt.

Im nachfolgenden Verfahrensschritt wird durch die mit 6 gekennzeichnete Funktion des Auswahlmenüs 4 der Informationstyp Graphik als Nachrichtenbestandteil erzeugt. Vorliegend wird eine eine Graphik, beispielsweise ein Photo oder dergleichen, beinhaltende Dabei bzw. Objekt 15 durch entsprechende Tasteneingabe seitens der als Eingabeeinrichtung dienenden Tastatur 3 des mobilen Endgerätes 1 geladen und seitens des Anzeigebereichs 10 des als Ausgabeeinrichtung dienenden Displays 2 des mobilen Endgerätes 1 wiedergegeben.

Nachfolgend wird im Rahmen der Funktion 7 durch entsprechende Tasteneingabe seitens der als Eingabeeinrichtung dienenden Tastatur 3 des mobilen Endgerätes 1 die Datei bzw. das Objekt 13 aus dem Speicher 11 geladen und anschließend durch eine weitere Tasteneingabe seitens der als Eingabeeinrichtung dienenden Tastatur 3 des mobilen Endgerätes 1 die entsprechend miteinander kombinierten Dateien bzw. Objekte 13 und 15 in einer weiteren Datei bzw. Objekt 18 gespeichert. Das Laden der Datei bzw. des Objektes 13 ist in Fig. 1 durch den mit 16 gekennzeichneten Pfeil dargestellt. Das Speichern der Datei bzw. des Objektes 18 ist in Fig. 1 mit dem mit 17 gekennzeichneten Pfeil symbolisch dargestellt.

Im Rahmen der Funktion 8 des seitens des als Ausgabeeinrichtung dienenden Displays 2 des mobilen Endgerätes 1 angezeigten Auswahlmenüs 4 werden exemplarisch sowohl der Nachrichtenbestandteil vom Informationstyp Text, als auch der Nachrichtenbestandteil vom Informationstyp Graphik verändert. Der Nachrichtenbestandteil vom Informationstyp Text ist vorliegend hinsichtlich seiner Position und der Nachrichtenbestandteil vom Informationstyp Graphik hinsichtlich seiner Farbe oder dergleichen Attribute verändert, wie anhand der unterschiedlichen Schraffuren des Nachrichtenbestandteils vom Informationstyp Graphik zu erkennen. Über eine Tasteneingabe seitens der als Eingabeeinrichtung dienenden Tastatur 3 des mobilen Endgerätes 1 ist der entsprechend veränderte, die Informationstypen Text und Graphik aufweisende Nachrichtenbestandteil in einer weiteren Datei bzw. einem weiteren Objekt 20 seitens des Speichers 11 des mobilen Endgerätes 1 gespeichert, wie durch den mit 19 gekennzeichneten Pfeil symbolisch dargestellt.

Über die im Auswahlmenü 4 angezeigte Funktion 9, welche durch entsprechende Tasteneingabe seitens der als Eingabeeinrichtung dienenden Tastatur 3 des mobilen Endgerätes 1 auswählbar ist, wird mittels entsprechender Tasteneingabe seitens der als Eingabeeinrichtung dienenden Tastatur 3 des mobilen Endgerätes 1 ein den Informationstyp Audio beinhaltendes Objekt bzw. Dabei 22 aus dem Speicher 11 des mobilen Endgerätes 1 als weiterer Nachrichtenbestandteil in die Nachricht geladen, wie anhand des in Fig. 1 mit 21 gekennzeichneten Pfeils symbolisch angedeutet. Die so entsprechend deh Informationstyp Text, Graphik und Audio beinhaltende Nachricht ist dann über entsprechende Tasteneingabe seitens der als Eingabeeinrichtung dienenden Tastatur 3 des mobilen Endgerätes 1 in dem Speicher 11 des mobilen Endgerätes 1 als Dabei bzw. Objekt 24 gespeichert, wie anhand des in Fig. 1 mit 23 gekennzeichneten Pfeils symbolisch dargestellt. Die Dabei bzw. das Objekt 24 ist als fertige Nachricht über das Mobilfunknetz mittels eines entsprechenden Nachrichtendienstes des Mobilfunknetzes übertragbar.

Anhand von Fig. 1 wird insbesondere ersichtlich, dass die bisher bekannte Nachrichtenerzeugung umfangreiche Tasteneingaben seitens der als Eingabeeinrichtung dienenden Tastatur 3 des mobilen Endgerätes 1 erfordern, insbesondere aufgrund der bisher gegebenen Erforderlichkeit des Abspeicherns und Ladens einzelner in den jeweiligen Verfahrensschritten erzeugter Nachrichtenbestandteile. Darüber hinaus sind Veränderungen von einzelnen oder kombinierten Informationstypen jeweils in separaten Dateien bzw. Objekten erforderlich, die die Nachrichtenerzeugung für den Nachrichtenerzeuger insgesamt aufwendig und bedienerunfreundlich machen, insbesondere da die jeweiligen Dateien bzw. Objekte 13, 15, 18, 20, 22 und 24 in einzelnen Verfahrensschritten jeweils gespeichert bzw. geladen werden müssen.

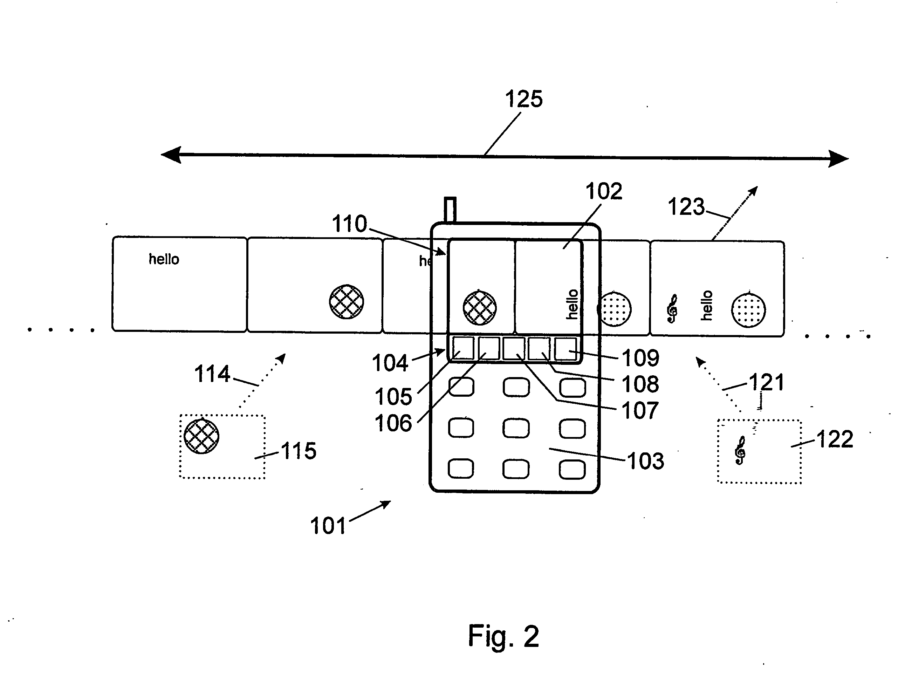

Bei dem in Fig. 2 dargestellten Ausführungsbeispiel einer erfindungsgemäßen Nachrichtenerzeugung einer mindestens einen Informationstyp beinhaltenden Nachricht seitens eines in einem Mobilfunknetz betreibbaren mobilen Endgerätes 101 mit einem als Ausgabeeinrichtung 102 dienenden Display und einer als Eingabeeinrichtung 103 dienenden Tastatur werden die einzelnen bei der Nachrichtenerzeugung anfallenden Verfahrensschritte seitens des mobilen Endgerätes 101 zusammenhängend erfasst und in einem seitens des mobilen Endgerätes 101 vorgesehenen - hier nicht explizit dargestellten - Speicher oder Zwischenspeicher gespeichert. Dabei sind die zusammenhängend erfassten, bei der Nachrichtenerzeugung anfallenden Verfahrensschritte fortlaufend nach Art einer Folie oder eines Bandes seitens eines dafür vorgesehenen Anzeigebereiches 110 des als optische Anzeigeeinrichtung 102 des mobilen Endgerätes 101 dienenden Displays wiedergegeben.

Bei dem in Fig. 2 dargestellten Ausführungsbeispiel sind die zeitlich aufeinanderfolgenden Verfahrensschritte der Nachrichtenerzeugung horizontal nebeneinander angeordnet in dem Anzeigebereich 110 des als Ausgabeeinrichtung 102 des mobilen Endgerätes 101 dienenden Displays wiedergebbar. Unterhalb des Anzeigebereichs 110 wird seitens des als Ausgabeeinrichtung 102 des mobilen Endgerätes 101 dienenden Displays ein Auswahlmenü 104 mit verschiedenen Funktionen 105, 106, 107, 108 und 109 zur Anzeige gebracht. Die Funktionalität der Funktionen 105 bis 109 entspricht vorliegenden den im Zusammenhang mit Fig. 1 beschriebenen Funktionalitäten der Funktionen 5 bis 9.

Die entsprechende Funktionalität zur Bearbeitungen und Veränderungen umfassenden Erzeugung eines Nachrichtenbestandteils erfolgt dabei durch Tasteneingabe seitens der als Eingabeeinrichtung 103 des mobilen Endgerätes 101 dienenden Tastatur 103.

Die bei der Nachrichtenerzeugung gemäß Fig. 2 zeitlich aufeinanderfolgenden Verfahrensschritte sind, wie anhand des in Fig. 2 mit 125 gekennzeichneten Doppelpfeils symbolisch angedeutet, durch einfache Tasteneingabe seitens der als Eingabeeinrichtung 103 des mobilen Endgerätes 101 dienenden Tastatur beliebig anwählbar, ohne dass - im Gegensatz zur Nachrichtenerzeugung im Stand der Technik gemäß Fig. 1 - einzelne Verfahrensschritte bzw. entsprechende Nachrichtenbestandteile separat aus einem Speicher des mobilen Endgerätes als Datei bzw. Objekt geladen oder gespeichert werden müssen.

Die den Informationstyp Graphik bzw. Audio beinhaltenden Dateien bzw. Objekte 115 und 122 sind vorliegend seitens eines hier nicht dargestellten Speichers des mobilen Endgerätes 101 gespeichert und werden jeweils in einzelnen Verfahrensschritten in die aktuelle Nachrichtenerzeugung geladen, wie in Fig. 2 symbolisch durch die mit 114 bzw. 121 gekennzeichneten Pfeile dargestellt. Die einzelnen Verfahrensschritte der Nachrichtenerzeugung werden vorliegend in einem Zwischenspeicher des mobilen Endgerätes 101 erfasst. Weiter ist vorgesehen, dass die einzelnen Verfahrensschritte, dementsprechend deren jeweilige Nachrichtenbestandteile und/oder die im Rahmen der Nachrichtenerzeugung erzeugte Nachricht selbst, das heißt ohne deren durch die Verfahrensschritte vorgegebene Entwicklung speicherbar sind.

In Fig. 2 ist die Speicherung der erzeugten Nachricht bzw. deren Übertragung mit einem Dienst des Mobilfunknetzes über das Mobilfunknetz, vorliegend als Multimedia-Mitteilung mittels eines Multimedia-Mitteilungsdienstes (MMS) durch den mit dem Bezugszeichen 123 versehenen Pfeil symbolisch dargestellt.

Die in den Figuren dargestellten Ausführungsbeispiele dienen lediglich der Erläuterung der Erfindung und sind für diese nicht beschränkend.

### Bezugszeichenliste

- 1, 101: mobiles Endgerät/Mobilfunktelefon
- 2, 102: Ausgabeeinrichtung/Display (mobiles Endgerät 1, 101)
- 3, 103: Eingabeeinrichtung/Tastatur (mobiles Endgerät 1, 101)
- 4, 104: Auswahlmenü (Ausgabeeinrichtung 2, 102)
- 5, 105: Funktion Auswahlmenü (4, 104)/Text
- 6, 106: Funktion Auswahlmenü (4, 104)/Graphik
- 7, 107: Funktion Auswahlmenü (4, 104)/kombinieren/laden
- 8, 108: Funktion Auswahlmenü (4, 104)/bearbeiten/verändern
- 9, 109: Funktion Auswahlmenü (4, 104)/Audio
- 10, 110: Anzeigebereich (Ausgabeeinrichtung 2, 102)
- 11: Speicher (mobiles Endgerät 1)
- 12: speichern
- 13: Datei, Objekt/Text
- 14, 114: laden Datei, Objekt
- 15, 115: Datei, Objekt/Graphik
- 16: laden Datei, Objekt
- 17: speichern Datei, Objekt
- 18: Datei, Objekt/Text und Graphik
- 19: speichern Datei, Objekt
- 20: Datei, Objekt/Text und Graphik
- 21, 121: laden Datei, Objekt
- 22, 122: Datei, Objekt/Audio
- 23, 123: speichern Datei, Objekt/Nachricht senden
- 24: Datei, Objekt/Text, Graphik und Audio/Nachricht
- 25, 125: zeitliche Reihenfolge Verfahrensschritte

## Patentansprüche

1. Verfahren zur Erzeugung einer mindestens einen Informationstyp beinhaltenden Nachricht seitens eines in einem Mobilfunknetz betreibbaren mobilen Endgerätes (1, 101), wobei die Nachrichtenerzeugung in wenigstens zwei zeitlich aufelnanderfolgenden Verfahrensschritten erfolgt und In Jedem Verfahrensschritt ein einzelner Informationstyp in die Nachricht eingefügt wird,
**dadurch gekennzeichnet, dass**
die bei der Nachrichtenerzeugung anfallenden Verfahrensschritte seitens des mobilen Endgerätes (101) zusammenhängend erfasst werden und dass die Verfahrensschritte bei der Nachrichtenerzeugung wiedergebbar sind.

2. Verfahren nach Anspruch 1, **dadurch gekennzeichnet, dass** die Verfahrensschritte seitens des mobilen Endgerätes (101) wiedergebbar sind.

3. Verfahren nach Anspruch 1 oder 2, **dadurch gekennzeichnet, dass** die Verfahrensschritte fortlaufend seitens des mobilen Endgerätes (101) wledergebbar sind.

4. Verfahren nach einem der Ansprüche 1 bis 3, **dadurch gekennzeichnet, dass** die Verfshrensschritte seitens einer optischen Anzeigeeinrichtung (102) des mobilen Endgerätes (101) wiedergebbar sind.

5. Verfahren nach Anspruch 4, **dadurch gekennzeichnet, dass** wenigstens ein Verfahrensschritt seitens der optischen Anzelgeelnrichtung (102) des mobilen Endgerätes (101) wiedergebbar ist.

6. Verfahren nach Anspruch 4 oder 5, **dadurch gekennzeichnet, dass** die Verfahrensschritte horizontal oder vertikal nebeneinander angeordnet seitens der optischen Anzeigeeinrichtung (102) des mobilen Endgerätes (101) wiedergebbar sind.

7. Verfahren nach einem der Ansprüche 1 bis 6, **dadurch gekennzeichnet, dass** die einzelnen Verfahrensschritte der Nachrichtenerzeugung separat veränderbar sind.

8. Verfahren nach Anspruch 8 7, **dadurch gekennzeichnet, dass** Veränderungen in einem vorhergehenden Verfahrensschritt entsprechende Veränderungen in einem nachfolgenden Verfahrensschritt bewirken.

9. Verfahren nach einem der Ansprüche 1 bis 8, **dadurch gekennzeichnet, dass** Verfahrensschritte einfügbar sind.

10. Verfahren nach einem der Ansprüche 1 bis 9, **dadurch gekennzeichnet, dass** Verfahrensschritte entfernbar sind.

11. Verfahren nach einem der Ansprüche 1 bis 10, **gekennzeichnet durch** die Informationstypen Graphik, Text, Bild, Audio, Video und/oder rechnergenerierte Animation.

12. Verfahren nach Anspruch 11, **dadurch gekennzeichnet, dass** die Informationstypen beliebig miteinander kombinierbar sind.

13. Verfahren nach Anspruch 11 oder 12, **dadurch gekennzeichnet, dass** die Informationstypen separat bearbeitbar sind.

14. Verfahren nach einem der Ansprüche 1 bis 13, **dadurch gekennzeichnet, dass** die Verfahrensschritte in einer Datei oder einem Objekt seitens des mobilen Endgerätes (101) speicherbar sind.

15. Verfahren nach einem der Ansprüche 1 bis 14, **dadurch gekennzeichnet, dass** die Nachricht in einer Datei oder einem Objekt seitens des mobilen Endgerätes (101) speicherbar ist.

16. Verfahren nach einem der Ansprüche 1 bis 15, **dadurch gekennzeichnet, dass** die Nachricht mit einem Dienst de Mobilfunknetzes über das Mobilfunknetz übertragbar Ist.

17. Verfahren nach Anspruch 16, **dadurch gekennzeichnet, dass** die Nachricht auf ein oder mehrere mobile Endgeräte (101) in dem Mobilfunknetz übertragbar ist.

18. Verfahren nach einem der Ansprüche 1 bis 17, **dadurch gekennzeichnet, dass** die Nachricht eine Multimedia-Mittellung und der Dienst des Mobilfunknetzes ein Multimedia-Mitteilungsdienst (MMS) des Mobilfunknetzes ist.

19. Mobiles Endgerät (101) zur Nutzung in Mobilfunknetzen,
**dadurch gekennzeichnet,**
**dass** dieses zur Ausführung eines Verfahrens nach einem der Ansprüche 1 bis 18 ausgebildet Ist.

20. Mobiles Endgerät (101) nach Anspruch 19, **dadurch gekennzeichnet, dass** dieses ein Mobilfunktelefon ist.

## Claims

1. A method for generating a message which contains at least one Information type by means of a mobile terminal (1, 101) that can be operated in a mobile radio network, wherein the message will be generated in at least two successive process steps and one single Information type will be inserted into the message in each process step,
**characterized in that**
the process steps which are involved in the message generation will be coherently gathered by the mobile terminal (101) and that the process steps can be reproduced during the generation of the message.

2. A method according to claim 1, **characterized in that** the process steps can be reproduced by the mobile terminal (101).

3. A method according to claim 1 or 2, **characterized In that** the process steps can be continuously reproduced by the mobile terminal (101).

4. A method according to one of the claims 1 through 3, **characterized In that** the process steps can be reproduced by means of an optical display device (102) of the mobile terminal (101).

5. A method according to claim 4, **characterized in that** at least one process step can be reproduced by means of an optical display device (102) of the mobile terminal (101).

6. A method according to claim 4 or 5, **characterized In that** the process steps can be reproduced by means of the optical display device (102) of the mobile terminal (101) while being arranged horizontally or vertically side by side.

7. A method according to one of the claims 1 through 6, **characterized in that** the individual process steps of the message generation can be separately modified.

8. A method according to claim 7, **characterized in that** modifications in a previous process step cause corresponding modifications in a subsequent process step.

9. A method according to one of the claims 1 through 8, **characterized in that** process steps can be inserted.

10. A method according to one of the claims 1 through 9, **characterized in that** process steps can be eliminated.

11. A method according to one of the claims 1 through 10 **characterized by** the information types graphic, text, image, audio, video and/or computer generated animation.

12. A method according to claim 11, **characterized in that** the information types can be arbitrarily combined with each other.

13. A method according to claim 11 or 12, **characterized in that** the information types can be separately edited.

14. A method according to one of the claims 1 through 13, **characterized in that** the process steps can be saved in a file or an object by the mobile terminal (101).

15. A method according to one of the claims 1 through 14, **characterized in that** the message can be saved in a file or an object by the mobile terminal (101).

16. A method according to one of the claims 1 through 15, **characterized in that** the message can be transmitted by a service of the mobile radio network via the mobile radio network.

17. A method according to claim 16, **characterized in that** the message can be transmitted to one or more mobile terminals (101) In the mobile radio network.

18. A method according to one of the claims 1 through 17, **characterized in that** the message is a multimedia message and the service of the mobile radio network is a multimedia message service (MMS) of the mobile radio network.

19. A mobile terminal (101) for the use in mobile radio networks,
**characterized in that**
this one is designed to carry out a method according to one of the claims 1 through 18.

20. A mobile terminal (101) according to claim 19, **characterized in that** this one is a mobile phone.

## Revendications

1. Procédé de génération d'un message contenant au moins un type d'information par un terminal mobile (1, 101) qu'on peut opérer dans un réseau mobile, dans lequel le message est généré dans au moins deux étapes de procédé successives et un type d'information particulier est inséré dans le message à chaque étape de procédé,
**caractérisé en ce que** les étapes de procédé qui font part de la génération de message sont enregistrées de manière cohérente par le terminal mobile (101) et que les étapes de procédé peuvent être reproduites pendant la génération de message.

2. Procédé selon la revendication 1, **caractérisé en ce que** les étapes de procédé peuvent être reproduites par le terminal mobile (101).

3. Procédé selon la revendication 1 ou 2, **caractérisé en ce que** les étapes de procédé peuvent être reproduites en continu par le terminal mobile (101).

4. Procédé selon l'une des revendications 1 à 3, **caractérisé en ce que** les étapes de procédé peuvent être reproduites par un dispositif d'affichage optique (102) du terminal mobile (101).

5. Procédé selon la revendication 4, **caractérisé en ce qu'**au moins une étape de procédé peut être reproduite par le dispositif d'affichage optique (102) du terminal mobile (101).

6. Procédé selon la revendication 4 ou 5, **caractérisé en ce que** les étapes de procédé peuvent être reproduites par le dispositif d'affichage optique (102) du terminal mobile (101) en étant disposées horizontalement ou verticalement l'une à côté de l'autre.

7. Procédé selon l'une des revendications 1 à 6, **caractérisé en ce qu'**on peut modifier les étapes de procédé individuelles de la génération de message de manière séparée.

8. Procédé selon la revendication 7, **caractérisé en ce que** des modifications d'une étape de procédé précédente entraînent des modifications correspondantes à une étape de procédé subséquente.

9. Procédé selon l'une des revendications 1 à 8, **caractérisé en ce qu'**on peut insérer des étapes de procédé.

10. Procédé selon l'une des revendications 1 à 9, **caractérisé en ce qu'**on peut éliminer des étapes de procédé.

11. Procédé selon l'une des revendications 1 à 10, **caractérisé par** des types d'information de graphique, de texte, d'audio, de vidéo et/ou d'animation générée par l'ordinateur.

12. Procédé selon la revendication 11, **caractérisé en ce qu'**on peut arbitrairement combiner les types d'information les uns avec les autres.

13. Procédé selon la revendication 11 ou 12, **caractérisé en ce qu'**on peut traiter les types d'information de manière séparée.

14. Procédé selon l'une des revendications 1 à 13, **caractérisé en ce que** les étapes de procédé peuvent être mémorisées dans un fichier ou un objet par le terminal mobile (101).

15. Procédé selon l'une des revendications 1 à 14, **caractérisé en ce que** le message peut être mémorisé dans un fichier ou un objet par le terminal mobile (101).

16. Procédé selon l'une des revendications 1 à 15, **caractérisé en ce qu'**on peut transmettre le message par un service du réseau mobile via le réseau mobile.

17. Procédé selon la revendication 18, **caractérisé en ce qu'**on peut transmettre le message à un ou plusieurs terminaux mobiles (101) dans le réseau mobile.

18. Procédé selon l'une des revendications 1 à 17, **caractérisé en ce que** le message est un message multimédia et le service du réseau mobile est un service de message multimédia (MMS) du réseau mobile.

19. Terminal mobile (101) pour l'utilisation dans des réseaux mobiles,
**caractérisé en ce que**
celui-ci est configuré pour l'exécution d'un procédé selon l'une des revendications 1 à 18.

20. Terminal mobile (101) selon la revendication 19, **caractérisé en ce que** celui-ci est un téléphone mobile.
